# EUROPÄISCHE PATENTANMELDUNG

(11) **EP 3 028 569 A1**
(43) Veröffentlichungstag der Anmeldung: **08.06.2016**
(21) Anmeldenummer: 14195676.3
(22) Anmeldetag: 01.12.2014
(51) Int. Cl.: A01N 37/02, A01N 59/06, A01P 1/00

(54) **Mittel zur Behandlung und/ oder Vorbeugung der eckigen Blattfleckenkrankheit**

(71) Anmelder: LANXESS Distribution GmbH, 51369 Leverkusen (DE)
(72) Erfinder: Saalfeld, Frank, 51377 Leverkusen (DE); Gareiß, Johannes, 40670 Meerbusch (DE)
(74) Vertreter: Deblon, Jörg-Stephan

(57) **Zusammenfassung**

Die Erfindung betrifft ein Verfahren zur Behandlung und/oder Vorbeugung der eckigen Blattfleckenkrankheit bei Pflanzen der Gattung Fragaria mit Mitteln enthaltend Formiate als aktiven Bestandteil.

## Beschreibung

Die Erfindung betrifft ein Verfahren zur Behandlung und/oder Vorbeugung der eckigen Blattfleckenkrankheit bei Pflanzen der Gattung Fragaria mit Mitteln enthaltend Formiate als aktiven Bestandteil.

Die eckige Blattfleckenkrankheit ist eine durch das phytopathogene Bakterium *Xanthomonas fragariae* hervorgerufene Pflanzenerhrankung, die insbesondere im Erdbeeranbau hohen kommerziellen Schaden anrichtet, weil sie sich schnell und grossräumig verbreitet und bislang äußerst schwer bekämpfbar ist. *Xanthomonas fragariae* gehört zur Familie der Pseudomonadaceae.

Der Wirtspflanzenkreis beschränkt sich auf Pflanzen der Gattung der Fragaria (Erdbeeren). Der Erreger wurde an zahlreichen Arten und Hybriden dieser Gattung nachgewiesen und verursacht hohe Ertragsverluste.

Für Nord- und Mitteleuropa sind die Arten *Fragaria ananassa*, *Fragaria vesca, Fragaria virginiana* häufig betroffen. Die Erkrankung kann durch infiziertes Pflanzmaterial oder auch von toten Blättern ausgehen, in denen das Bakterium überwintert hat. Die Verbreitung wird durch Spritzwasser wie Regen oder künstliche Bewässerung oder andere mechanische Einwirkung z.B. durch Arbeitsgeräte oder menschlichen Einsatz begünstigt.

Das Bakterium dringt dabei über Spaltöffnungen und Verletzungen in die Wirtspflanze ein und kann in Bakterientaschen z.B. im Rhizom lange überdauern. Optimale Bedingungen für die Vermehrung des Bakteriums sind bei 18 bis 26°C und mittlerer Luftfeuchtigkeit gegeben.

Typische Merkmale der eckigen Blattfleckenkrankheit sind, wie der Name schon andeutet, typische eckige von den Blattadern begrenzte Flecken auf älteren Blättern bei starkem Befall auch auf mittelalten und jüngeren Blättern.

Die Anwendung üblicher Pflanzenschutzmittel zeigt in der Praxis nur mäßigen Erfolg. Behandlungen mit Kupferoxychlorid-Präparaten können die Infektion neu entwickelter Blätter, Blüten und Kelchblätter vermindern, müssen jedoch mehrmals nach genau vorgegebenen Perioden durchgeführt werden und bringen eine Schwermetallbelastung des Bodens mit sich.

Aus WO 2013/107785 A ist weiterhin bekannt, Abwehrinduktoren wie zum Beispiel Isotianil zur Abwehr von *Xanthomonas fragariae* einzusetzen.

Es besteht also weiterhin Bedarf an einem Mittel zur Bekämpfung der eckigen Blattfleckenkrankheit, das einerseits einen hohen Wirkungsgrad aufweist und andererseits nicht mit den vorgenannten Nachteilen behaftet ist.

Gegenstand der Erfindung ist nun die Verwendung wässriger Pflanzenbehandlungsmittel enthaltend
- mindestens 85 Gew.-%, vorzugsweise mindestens 90 Gew.-%, besonders bevorzugt mindestens 94 Gew.-% Wasser
- 0,1 Gew.-% bis 3 Gew.-% bevorzugt 0,2 Gew.-% bis 2 Gew.-% an Calciumsalzen berechnet auf Calciumoxid
- 0,15 Gew.-% bis 4,5 Gew.-% bevorzugt 0,3 Gew.-% bis 3 Gew.-% an Formiaten berechnet auf Ameisensäure
   wobei vorzugsweise
- der pH-Wert der wässrigen Pflanzenbehandlungsmittel 3,0 bis 6,5 bezogen auf Standardbedingungen beträgt
   zur Behandlung und/oder Vorbeugung der eckigen Blattfleckenkrankheit, sowie ein Verfahren zur Behandlung und/oder Vorbeugung der eckigen Blattfleckenkrankheit wobei bei Pflanzen der Gattung Fragaria mit den vorgenannten Mitteln in Kontakt gebracht werden.

Es sei an dieser Stelle angemerkt, dass der Rahmen der Erfindung alle beliebigen und möglichen Kombinationen der oben stehenden und im Folgenden aufgeführten, allgemeinen oder in Vorzugsbereichen genannten Komponenten, Wertebereiche, bzw. Verfahrensparameter umfasst.

In einer bevorzugten Ausführungsform beträgt das molare Verhältnis von Formiaten zu Calcium zwischen 1:4 und 4:1, bevorzugt zwischen 1:2 und 4:1, besonders bevorzugt zwischen 1:1,5 und 3:1 und ganz besonders bevorzugt zwischen 1:1 und 2,5:1.

In einer weiteren bevorzugten Ausführungsform beträgt der pH-Wert der erfindungsgemäßen Mittel 4,0 bis 5,0 und besonders bevorzugt 4,0 bis 4,8 und ganz besonders bevorzugt 4,0 bis 4,3 bei Standardbedingungen.

Zur Erzielung der vorgenannten pH-Werte eignen sich Säuren und saure Salze. Besonders geeignet sind organische Säuren mit einem pKs-Wert von 2 bis 6, die mit Calcium-Ionen keine schwerlöslichen Salze bilden, sowie entsprechend sauer wirkende Ammoniumsalze wie beispielsweise Ammoniumchlorid und organische Ammoniumsalze oder Additionsverbindungen wie beispielsweise Alkalimetalldiformate.

Unter schwerlöslichen Calciumsalzen werden im Rahmen der Erfindung solche verstanden, die in Gegenwart der entsprechenden freien Säure und bei pH-Werten von 3,0 bis 6,5 bei Standardbedingungen eine Löslichkeit von weniger als 1g/l aufweisen.

Geeignete organische Säuren sind beispielsweise Ameisensäure, Essigsäure, Propionsäure Milchsäure, Weinsäure, Äpfelsäure, Bernsteinsäure und Zitronensäure.

Zur Behandlung von Pflanzen werden die erfindungsgemäßen Pflanzenbehandlungsmittel vorzugsweise auf die Pflanzenorgane auf übliche Weise, z.B. durch Sprühen oder Bepinseln, bevorzugt durch Sprühen, aufgebracht. Das Aufbringen kann vorbeugend oder auch bei bereits von der eckigen Blattfleckenkrankheit befallenen Pflanzen erfolgen.

Die erfindungsgemäßen Pflanzenbehandlungsmittel werden beispielsweise und bevorzugt in Aufwandmengen von 50 bis 1000 l/ha, vorzugsweise von 300 bis 600 l/ha.

Weiterhin ist es bevorzugt, pro Anwendung und Hektar zwischen 1 kg und 20 kg, Calciumsalze berechnet auf Calciumoxid und zwischen 1,5 kg bis 30 kg an Formiaten berechnet auf Ameisensäure auszubringen.

Zur Behandlung der eckigen Blattfleckenkrankheit können beispielsweise während der Blüte 1 bis 5, vorzugsweise 2 bis 3 Anwendungen und/oder während der Vegetationszeit in 1 bis 10 Anwendungen durchgeführt werden.

Zur Behandlung der eckigen Blattfleckenkrankheit können beispielsweise bis zur Ernte insgesamt 1 bis 10, vorzugsweise 3 bis 8 und besonders bevorzugt 5 bis 6 Anwendungen durchgeführt werden.

Typischerweise bevorzugt, zur Behandlung der eckigen Blattfleckenkrankheit pro Anwendung und Hektar zwischen 1 kg und 20 kg, Calciumsalze berechnet auf Calciumoxid und zwischen 1,5 kg und 30 kg an Formiaten berechnet auf Ameisensäure auszubringen, bevorzugt zwischen 3 kg und 10 kg, Calciumsalze berechnet auf Calciumoxid und zwischen 4,5 kg und 15 kg an Formiaten berechnet auf Ameisensäure auszubringen.

Um die Anwendung für den Anwender möglichst einfach zu gestalten, werden die erfindungsgemäßen wässrigen Pflanzenbehandlungsmittel vorzugsweise so hergestellt, dass im Wesentlichen feste Formulierungen oder zumindest im Wesentlichen flüssige Konzentrate mit der entsprechenden Menge an Wasser verdünnt werden.

Die zumindest im Wesentlichen festen Formulierungen, die ebenfalls vom Rahmen der Erfindung umfasst sind, enthalten typischerweise
- zwischen 5 und 40 Gew.-% an Calciumsalzen berechnet auf Calciumoxid, vorzugsweise zwischen 10 und 35 Gew.-% und besonders bevorzugt zwischen 20 und 30 Gew.-%
- zwischen 5 und 70 Gew.-% an anorganischen Formiaten berechnet auf Ameisensäure, vorzugsweise zwischen 20 und 60 Gew.-% und besonders bevorzugt zwischen 45 und 60 Gew.-%
- 0,5 und 70 Gew.-% einer bei Standardbedingungen im Wesentlichen festen organischen Säure oder einem sauren Salz mit einem pKs-Wert von 2 bis 6.

In einer bevorzugten Ausführungsform beträgt das molare Verhältnis von Formiat zu Calcium zwischen 1:4 und 4:1, bevorzugt zwischen 1:2 und 4:1, besonders bevorzugt zwischen 1:1,5 und 3:1 und ganz besonders bevorzugt zwischen 1:1 und 2,5:1.

Das Calcium und die Formiate können in die erfindungsgemäßen wässrigen Pflanzenbehandlungsmittel sowie die im Wesentlichen festen Formulierungen im Wesentlichen flüssigen Konzentrate prinzipiell in Form beliebiger Verbindungen eingebracht werden, solange sie neben der gewünschten Behandlung von *Xanthomonas fragariae* keine signifikante phytotoxische Wirkung aufweisen. Dies kann jedoch in dem Fachmann hinlänglich bekannten, einfachen Tests geprüft werden.

Bevorzugt sind für die Einbringung von Formiaten Alkalimetallformiate wie beispielsweise Kaliumformiat und Natriumformiat, Alkalimetalldiformate, wie beispielsweise Kaliumdiformiat und Natriumdiformiat und Erdalkalimetallformiate wie beispielsweise Calciumformiat oder Mischungen solcher Formiate.

Bevorzugt sind für die Einbringung von Calcium Calciumformiat und andere Calciumsalze von organischen Carbonsäuren, Calciumchlorid, Calciumnitrat und andere anorganische Calciumsalze, wobei Calciumformiat und Calciumchlorid bevorzugt sind und Calciumformiat besonders bevorzugt ist.

In einer besonders bevorzugten Ausführungsform enthalten die zumindest im Wesentlichen festen Formulierungen 10 bis 98, bevorzugt 30 bis 90, und besonders bevorzugt 50 bis 80 Gew.% an Calciumformiat.

In einer weiter bevorzugten Ausführungsform enthalten die zumindest im Wesentlichen festen Formulierungen zusätzlich zwischen 0,5 und 70 Gew.-%, vorzugsweise 1 bis 30 und besonders bevorzugt 5 bis 20 Gew.-% einer bei Standardbedingungen im Wesentlichen festen organischen Säure mit einem pKs-Wert von 2 bis 6, vorzugsweise 3 bis 5, besonders bevorzugt 3 bis 4, wie zum Beispiel Zitronensäure.

Die zumindest im Wesentlichen festen Formulierungen können beispielsweise als Pulver, Pellets, Granulat, Kapseln oder Tabletten, je nach Wunsch auch portionsweise formuliert und abgepackt werden, bevorzugt erfolgt die Formulierung als Granulat, noch weiter bevorzugt als im Wesentlichen staubfreies Mikrogranulat. Die zumindest im Wesentlichen festen Formulierungen können dann unmittelbar vor der Anwendung mit Wasser auf die Anwendungskonzentration verdünnt werden oder zunächst mit Wasser verdünnt werden, wobei zumindest im Wesentlichen flüssige Konzentrate entstehen, die dann wiederum mit Wasser auf die Anwendungskonzentration verdünnt werden können. Die vorgenannten Parameter und Konzentrationen für wässrige Pflanzenbehandlungsmittel gelten für die mit Wasser verdünnten zumindest im Wesentlichen festen Formulierungen dann in analoger Weise. Für die zumindest im Wesentlichen flüssigen Konzentrate gelten die für die zumindest im Wesentlichen festen Formulierungen genannten Bereiche und Vorzugsbereiche analog. Bevorzugte, zumindest im Wesentlichen flüssige Konzentrate sind solche, die durch Vermischung von jeweils einem Gewichtsteil der erfindungsgemäßen, im Wesentlichen festen Formulierungen mit 0,2 bis 20, vorzugsweise 0,5 bis 10, besonders bevorzugt 0,5 bis 5 und ganz besonders bevorzugt 1 bis 5 Gewichtsteilen Wasser erhältlich sind. Vorgenannte zumindest im Wesentlichen flüssige Konzentrate sind ebenfalls von der Erfindung umfasst.

Die erfindungsgemäßen wässrigen Pflanzenbehandlungsmittel, die zumindest im Wesentlichen festen Formulierungen und die zumindest im Wesentlichen flüssigen Konzentrate können weiterhin verschiedene Zusatzstoffe enthalten. Für die nachstehend genannten Zusatzstoffe besteht jeweils unabhängig voneinander auch die Möglichkeit, dass sie nicht enthalten sind Die im Folgenden gemachten Angaben für die zumindest im Wesentlichen festen Formulierungen, gelten unter Berücksichtigung entsprechender Verdünnung für die erfindungsgemäßen wässrigen Pflanzenbehandlungsmittel und die im Wesentlichen flüssigen Konzentrate analog.
- Hygroskopische Substanzen und/oder Feuchthaltemittel zur Regulierung der Feuchtigkeit: Hygroskopische Substanzen sind beispielsweise hygroskopische anorganische Salze wie zum Beispiel Calciumchlorid oder Calciumnitrat; geeignete Feuchthaltemittel sind beispielsweise organische Substanzen wie beispielsweise Glycerin, Polydextrose, Sorbit, Xylit, Propylenglykole, Polyethenylenglycole oder Gemische dieser Polyole.
   Die zumindest im Wesentlichen festen Formulierungen können dabei beispielsweise 0,01 bis 40, vorzugsweise 0,2 bis 20 und besonders bevorzugt 0,5 bis 2 Gew.-% an hygroskopischen Substanzen und/oder Feuchthaltemitteln enthalten.
- Grenzflächenaktive Stoffe, wie beispielsweise Tenside. Tenside können beispielsweise nichtionische, kationische und amphotere Tenside, vorzugsweise anionische Tenside sein. Geeignete anionische Tenside sind beispielsweise Alkylsulfate, Alkylethersulfate, Alkylarylsulfonate, Alkylsuccinate, Alkylsulfosuccinate, N-Alkoylsarkosinate, Acyltaurate, Acylisethionate, Alkylphosphate, Alkyletherphosphate, Alkylethercarboxylate, Alpha-Olefinsulfonate, insbesondere die Alkali- und Erdalkalimetallsalze, z.B. Natrium, Kalium, Magnesium, Calcium, sowie Ammonium- und Triethanolamin-Salze. Die Alkylethersulfate, Alkyletherphosphate und Alkylethercarboxylate können jeweils beispielsweise zwischen 1 bis 10 Ethylenoxid- oder Propylenoxid-Einheiten, bevorzugt 1 bis 3 Ethylenoxideinheiten aufweisen. Geeignet sind zum Beispiel Natriumlaurylsulfat, Ammoniumlaurylsulfat, Natriumlaurylethersulfat, Ammoniumlaurylethersulfat, Natriumlaurylsarkosinat, Natriumoleylsuccinat, Ammoniumlaurylsulfosuccinat, Natriumdodecylbenzolsulfonat, Triethanolamindodecyl-benzolsulfonat. Die zumindest im Wesentlichen festen Formulierungen können dabei beispielsweise 0,01 bis 10, vorzugsweise 0,2 bis 8, besonders bevorzugt 0,3 bis 5 und ganz besonders bevorzugt 0,5 bis 3 Gew.-% an grenzflächenaktiven Stoffen enthalten.
- Benetzungsmittel, wie beispielsweise Alkali-, Erdalkali-, Ammoniumsalze von aromatischen Sulfonsäuren, z.B. Lignin-, Phenol-, Naphthalin-und Dibutylnaphthalinsulfonsäure, sowie von Fettsäuren, Alkyl-und Alkylarylsulfonaten, Alkyl-, Laurylether-und Fettalkoholsulfaten, sowie Salze sulfatierter Hexa-, Hepta-und Octadecanole oder Fettalhoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl-oder Nonylphenol, Alkylphenol-oder Tributylphenylpolyglycolether, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose. Die zumindest im Wesentlichen festen Formulierungen können dabei beispielsweise 0,01 bis 8, vorzugsweise 0,2 bis 6, besonders bevorzugt 0,3 bis 5 und ganz besonders bevorzugt 0,5 bis 3 Gew.-% an Benetzungsmitteln enthalten.
- Emulgatoren, wie beispielsweise Natrium-, Kalium-und Ammoniumsalze von gradkettigen aliphatischen Carbonsäuren der Kettenlänge C ₁₂-C₂₀, Natriumhydroxyoctadecansulfonat, Natrium-, Kalium-und Ammoniumsalze von Hydroxyfettsäuren der Kettenlänge C₁₂-C₂₀ und deren Sulfierungs-bzw. Acetylierungsprodukte, Alkylsulfate, auch als Triethanolaminsalze, Alkyl-(C₁₀-C₂₀)-sulfonate, Alkyl(C₁₀-C₂₀)-arylsulfonate, Dimethyldialkyl(C₈-C₁₈)-ammoniumchlorid, Acyl-, Alkyl-, Oleyl-und Alkylaryloxethylate und ihre Sulfierungsprodukte, Alkalisalze der Sulfobernsteinsäureester mit aliphatischen gesättigten einwertigen Alkoholen der Kettenlänge C₄-C₁₆, Sulfobernsteinsäure-4-Ester mit Polyethylenglykolethern von einwertigen aliphatischen Alkoholen der Kettenlänge C₁₀-C₁₂ (Di-Natriumsalz), Sulfobernsteinsäure-4-Ester mit Polyethylenglykolnonylphenylether (Di-Natriumsalz), Sulfobernsteinsäure bis-cyclohexylester (Natriumsalz), Ligninsulfonsäure sowie deren Calcium-, Magnesium-, Natrium-und Ammoniumsalze, Polyoxyethylensorbitanmonooleat mit 20 Ethylenoxidgruppen, Harzsäuren, hydrierte und dehydrierte Harzsäuren sowie deren Alkalisalze, dodecyliertes Diphenyletherdisulfonsaures Natrium sowie Copolymere aus Ethylenoxyd und Propylenoxyd mit einem Mindestgehalt von 10 Gew.-% Ethylenoxid. Vorzugsweise werden als Emulgatoren verwendet: Natriumlaurylsulfat, Natriumlaurylethersulfat, ethoxyliert (3 Ethylenoxidgruppen); die Polyethylenglykol(4-20)ether des Oleylalkohols sowie die Polyethenoxid-(4-14)ether von Nonylphenol. Die zumindest im Wesentlichen festen Formulierungen können dabei beispielsweise 0,01 bis 15, vorzugsweise 0,2 bis 8, besonders bevorzugt 0,5 bis 6 und ganz besonders bevorzugt 1 bis 5 Gew.-% an Emulgatoren enthalten.
- Dispergiermittel, wie beispielsweise Alkylphenolpolyglycolether. Die zumindest im Wesentlichen festen Formulierungen können dabei beispielsweise 0,01 bis 8, vorzugsweise 0,1 bis 6, besonders bevorzugt 0,2 bis 5 und ganz besonders bevorzugt 0,4 bis 3 Gew.-% an Dispergiermitteln enthalten.
- Stabilisatoren, wie z.B. Cellulose und Cellulosederivate. Die zumindest im Wesentlichen festen Formulierungen können dabei beispielsweise 0,01 bis 6, vorzugsweise 00,1 bis 3, besonders bevorzugt 0,01 bis 2 und ganz besonders bevorzugt 0,01 bis 1 Gew.-% an Stabilisatoren enthalten.
- Haftmittel, wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipid sowie Paraffinöle. Die zumindest im Wesentlichen festen Formulierungen können dabei beispielsweise 0,01 bis 8, vorzugsweise 0,1 bis 4, besonders bevorzugt 0,2 bis 3 und ganz besonders bevorzugt 0,2 bis 2 Gew.-% an Haftmitteln enthalten.
- Spreitmittel, wie beispielsweise Isopropylmyristat Polyoxyethylennonylphenylether und Polyoxyethylenlaurylphenylether. Die zumindest im Wesentlichen festen Formulierungen können dabei beispielsweise 0,01 bis 20, vorzugsweise 0,1 bis 10, besonders bevorzugt 0,1 bis 5 und ganz besonders bevorzugt 0,1 bis 2 Gew.-% an Spreitmitteln enthalten.
- Organische Lösungsmittel, wie beispielsweise ein- oder mehrwertige Alkohole, Ester, Ketone und Kohlenwasserstoffe. Beispiele für geeignete Lösungsmittel sind Paraffine, z.B. Erdölfraktionen, mineralische und pflanzliche Öle, Butanol oder Glykol sowie deren Ether und Ester, Ketone wie Aceton, Methylethylketon, Methylisobutylketon oder Cyclohexanon. Die zumindest im Wesentlichen festen Formulierungen können dabei beispielsweise 0,01 bis 25, vorzugsweise 0,2 bis 12, besonders bevorzugt 0,5 bis 7 und ganz besonders bevorzugt 1 bis 4Gew.-% an organischen Lösungsmittel enthalten.
- Duftstoffe und Farbstoffe, wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink. Die zumindest im Wesentlichen festen Formulierungen können dabei beispielsweise jeweils 0,001 bis 4, vorzugsweise 0,01 bis 1, besonders bevorzugt 0,01 bis 0,8 Gew.-% an Duftstoffen und Farbstoffen enthalten.
- Entstaubungsmittel, wie beispielsweise Polyglykole und Polyglykolether. Die zumindest im Wesentlichen festen Formulierungen können dabei beispielsweise jeweils 0,01 bis 2, vorzugsweise 0,05 bis 1, besonders bevorzugt 0,1 bis 0,5 Gew.-% an Entstaubungsmitteln enthalten.
- Puffersubstanzen, Puffersysteme oder pH-Wert-Regulatoren. Die zumindest im Wesentlichen festen Formulierungen können dabei beispielsweise jeweils 0,01 bis 10, vorzugsweise 0,1 bis 5, Gew.-% an Puffersubstanzen, Puffersystemen oder pH-Wert-Regulatoren enthalten.

Vorzugsweise beträgt der Gehalt der vorgenannten Zusatzstoffe in den festen Formulierungen in Summe 0,01 bis 25, vorzugsweise 0,5 bis 10 und besonders bevorzugt 1 bis 5 Gew.-%.

Weiterhin können die zumindest im Wesentlichen festen Formulierungen weitere wirksame Bestandteile wie Bakterizide, Fungizide, Insektizide, Akarizide, Wachstumsregulatoren oder Abwehrinhibitoren wie beispielsweise Isotianil enthalten.

Vorzugsweise enthalten die zumindest im Wesentlichen festen Formulierungen keine bzw. 0,001 bis 10 Gew.-% an weiteren wirksamen Bestandteilen, vorzugsweise keine bzw. 0,001 bis 2 Gew.-%, besonders bevorzugt enthalten sie jedoch keine weiteren, wirksamen Bestandteile bzw. keine Bakterizide, Fungizide, Insektizide, Akarizide, Wachstumsregulatoren oder Abwehrinhibitoren wie beispielsweise Isotianil.

Besonders bevorzugte im Wesentlichen feste Formulierungen sind solche die zwischen 50 und 80, vorzugsweise 60 und 75 Gew.-% Calciumformiat und über 15 Gew.-%, bevorzugt über 16 Gew.-% und besonders 18 und 25 Gew.-% einer mehrwertigen organischen Säure wie insbesondere Zitronensäure und gegebenenfalls aber bevorzugt ein Netzmittel oder ein Feuchthaltemittel enthalten.

Die erfindungsgemäßen wässrigen Pflanzenbehandlungsmittel, die zumindest im Wesentlichen festen Formulierungen sowie die zumindest im Wesentlichen flüssigen Konzentrate eignen sich insbesondere zur Anwendung in einem Verfahren zur Behandlung und /oder Vorbeugung von *Xanthomonas fragariae* bei allen für die eckige Blattfleckenhranhheit empfindlichen Pflanzen, wie insbesondere Pflanzen der Gattung Fragaria, hier insbesondere bei folgenden Arten und Hybriden: *Fragaria chiloensis, Fragaria daltoniana*, *Fragaria iinumae*, *Fragaria iturupensis*, *Fragaria daltoniana*, *Fragaria iinumae, Fragaria iturupensis*, *Fragaria moupinensis, Fragaria moschata, Fragaria nilgerrensis*, *Fragaria nipponica, Fragaria nubicola*, *Fragaria orientalis, Fragaria vesca, Fragaria virginiana*, *Fragaria viridis*, *Fragaria yezoensis*, *Fragaria* x *ananassa*, *Fragaria* x *vescana*, *Fragaria* x *magna.*

Zur weiteren Erläuterung der Erfindung werden die folgenden Beispiele angegeben.

### Beispiele

### 1. Prüfung der Reduktion der Xanthomonas fragariae Population auf Erdbeerblättern

Eine Startkultur gewonnen aus mit *Xanthomonas fragariae* befallenen Erdbeerblättern wurde so aufbereitet und auf Agarplatte kultiviert, dass vor der Behandlung pro Gesichtsfeld ca 100 Bakterien gezählt werden konnten.

### Pflanzenbehandlungsmittel:

1 Gew.-Teil einer festen Formulierung enthaltend
75 Gew.-% Calciumformiat
10 Gew.-% Zitronensäure
13 Gew.-% Calciumchlorid
2 Gew.-% weiteren Hilfsmitteln u.a. eines Benetzungsmittels wurde jeweils in 100 Gew.-Teilen (P 1%); 125 Gew.-Teilen (P 0,8%), 250 Gew.-Teilen (P 0,4%) und 500 Gew.-Teilen (P 0,2%) Wasser gelöst und die Lösung für die nachfolgende Behandlung eingesetzt.

Das Pflanzenbehandlungsmittel wurde in den o.g. Verdünnungen angesetzt und dann die Bakterien zugesetzt. Die Verdünnungen wurden
a) unmittelbar und
b) nach 2 Stunden Einwirkzeit auf Bakterienbefall untersucht.

### Ergebnis:

P (1%): Es wurden nach zwei Stunden noch 2-5% der ursprünglichen Bakterienzahl gefunden.
P (0,8%): Es wurden nach zwei Stunden noch 10% der ursprünglichen Bakterienzahl gefunden.
P (0,4%): Es wurden nach zwei Stunden noch 20% der ursprünglichen Bakterienzahl gefunden.
P (0,2%): Es wurden nach zwei Stunden noch 30% der ursprünglichen Bakterienzahl gefunden.

### 2. Prüfung der Bekämpfung Xanthomonas fragariae in Erdbeerkulturen

Für nachfolgende Tests wurden 18 Monate alte Erdbeerpflanzen der Sorte Elsanta *(Fragaria* x *ananassa var. Elsanta)* im Freiland verwendet. Die Pflanzung erfolgte in Doppelreihen (Im Doppelreihenabstand x 0,6 m Abstand innerhalb der Doppelreihe x 0,33 m Pflanzabstand) in 2 Versuchsgliedern zu je 8 laufenden Metern.

Die künstliche Inokulation erfolgte am 15. April mit 20 l einer Suspension erhalten durch Mischung von 4 l einer Bakteriensuspension von *Xanthomonas fragariae* (6 x 10⁷ KbE) und 26 1 Wasser.

### Pflanzenbehandlungsmittel (P):

Zur Behandlung von einem Hektar wurden 15 kg einer festen Formulierung enthaltend
63,75 Gew.-% Calciumformiat
18,75 Gew.-% Zitronensäure
16,73 Gew.-% Calciumchlorid
0,77 Gew.-% Netz- und Entstaubungsmittel
in 2000 l Leitungswasser gelöst und die Lösung in entsprechender Menge für die nachfolgende Behandlung der Versuchsglieder eingesetzt. Der pH-Wert betrug 4,2.

### Behandlungen:

Der Einsatz des Pflanzenbehandlungsmittels erfolgte in einem Versuchsglied in den vorgenannten Mengen am 20. April, 28. April, 4. Mai, 11. Mai, 19. Mai und 01. Juni.

### Auswertung

Die Bonitur erfolgte am 07. Juni

Ergebnis (Bewertung aller Früchte pro Parzelle):

| **Versuchsglied** | **Präparat** | **Phytotoxizität** | **Früchte ohne Befall** | **Früchte mit Befall** | **% Befall** | **Wirkungsgrad %** |
|---|---|---|---|---|---|---|
| 1 | Unbehandelt | - | 570 | 67 | 10,52 | - |
| 2 | P | 0 | 487 | 30 | 5,80 | 44,8 |

## Patentansprüche

1. Verfahren zur Behandlung und/oder Vorbeugung der eckigen Blattfleckenkrankheit durch Inkontaktbringen von Pflanzen der Gattung Fragaria mit wässrigen Pflanzenbehandlungsmitteln enthaltend
• mindestens 85 Gew.-%, vorzugsweise mindestens 90 Gew.-%, besonders bevorzugt mindestens 94 Gew.-% Wasser
• 0,1 Gew.-% bis 3 Gew.-% bevorzugt 0,2 Gew.-% bis 2 Gew.-% an Calciumsalzen berechnet auf Calciumoxid
• 0,15 Gew.-% bis 4,5 Gew.-% bevorzugt 0,3 Gew.-% bis 3 Gew.-% an Formiaten berechnet auf Ameisensäure

2. Verfahren nach Anspruch 1, **dadurch gekennzeichnet, dass** die wässrigen Pflanzenbehandlungsmittel einen pH-Wert von 3,0 bis 6,5 bezogen auf Standardbedingungen aufweist, vorzugsweise 4,0 bis 5,0, besonders bevorzugt 4,0 bis 4,8 und ganz besonders bevorzugt 4,0 bis 4,3.

3. Verfahren nach Anspruch 1 oder 2, **dadurch gekennzeichnet, dass** in den wässrigen Pflanzenbehandlungsmitteln das molare Verhältnis von Formiaten zu Calcium zwischen 1:4 und 4:1, bevorzugt zwischen 1:2 und 4:1, besonders bevorzugt zwischen 1:1,5 und 3:1 und ganz besonders bevorzugt zwischen 1:1 und 2,5:1 beträgt.

4. Verfahren nach einem der Ansprüche 1 bis 3, **dadurch gekennzeichnet, dass** die wässrigen Pflanzenbehandlungsmittel auf die Pflanzenorgane durch Sprühen oder Bepinseln aufgebracht werden.

5. Verfahren nach einem der Ansprüche 1 bis 4, **dadurch gekennzeichnet, dass** die wässrigen Pflanzenbehandlungsmittel in Aufwandmengen von 50 bis 1000 l/ha, vorzugsweise von 300 bis 600 l/ha pro Anwendung ausgebracht werden.

6. Verfahren nach einem der Ansprüche 1 bis 5, **dadurch gekennzeichnet, dass** pro Anwendung und Hektar zwischen 1 kg und 20 kg, Calciumsalze berechnet auf Calciumoxid und zwischen 1,5 kg bis 30 kg an Formiaten berechnet auf Ameisensäure ausgebracht werden.

7. Verfahren nach einem der Ansprüche 1 bis 6, **dadurch gekennzeichnet, dass** während der Blüte 1 bis 5, vorzugsweise 2 bis 3 Anwendungen und/oder während der Vegetationszeit 1 bis 10 Anwendungen durchgeführt werden.

8. Verfahren nach einem der Ansprüche 1 bis 7, **dadurch gekennzeichnet, dass** bis zur Ernte insgesamt 1 bis 10, vorzugsweise 3 bis 8 und besonders bevorzugt 5 bis 6 Anwendungen durchgeführt werden.

9. Verfahren nach einem der Ansprüche 1 bis 8, **dadurch gekennzeichnet, dass** die wässrigen Pflanzenbehandlungsmittel so hergestellt werden, dass im Wesentlichen feste Formulierungen oder zumindest im Wesentlichen flüssige Konzentrate mit der entsprechenden Menge an Wasser verdünnt werden.

10. Verfahren nach Anspruch 9, **dadurch gekennzeichnet, dass** die festen Formulierungen enthalten:
Zwischen 5 und 40 Gew.-% an Calciumsalzen berechnet auf Calciumoxid, zwischen 5 und 70 Gew.-% an anorganischen Formiaten berechnet auf Ameisensäure und 0,5 bis 70 Gew.-% einer bei Standardbedingungen im Wesentlichen festen organischen Säure oder einem sauren Salz mit einem pKs-Wert von 2 bis 6.

11. Verfahren nach einem der Ansprüche 1 bis 10, **dadurch gekennzeichnet, dass** die Pflanzen der Gattung Fragaria folgenden Arten und Hybride sind:
*Fragaria chiloensis*, *Fragaria daltoniana*, *Fragaria iinumae*, *Fragaria iturupensis, Fragaria daltoniana*, *Fragaria iinumae*, *Fragaria iturupensis, Fragaria moupinensis, Fragaria moschata, Fragaria nilgerrensis, Fragaria nipponica, Fragaria nubicola*, *Fragaria orientalis, Fragaria vesca, Fragaria virginiana, Fragaria viridis, Fragaria yezoensis*, *Fragaria* x *ananassa*, *Fragaria* x *vescana*, *Fragaria* x *magna*.

12. Verwendung von wässrigen Pflanzenbehandlungsmittel wie in den Ansprüchen 1 bis spezifiziert oder im Wesentlichen feste Formulierungen oder zumindest im Wesentlichen flüssige Konzentrate wie in den Ansprüchen 9 und 10 spezifiziert zur Vorbeugung und/oder Behandlung der eckigen Blattfleckenkrankheit.

13. Verwendung von Formiaten wie insbesondere Calciumformiat oder organischen Säuren oder sauren Salzen in wässrigen Pflanzenbehandlungsmitteln gegen *Xanthomonas Fragariae.*
